# EUROPEAN PATENT APPLICATION

(11) **EP 4 752 675 A1**
(43) Date of publication of application: **03.06.2026**
(21) Application number: 25211775.9
(22) Date of filing: 28.10.2025
(51) Int. Cl.: G06F 1/12, H04L 47/28

(54) **METHOD AND SYSTEM FOR DETERMINISTIC COMMUNICATION BETWEEN A PLURALITY OF INTERCONNECTED SEMICONDUCTOR CHIPS**

(30) Priority: 29.11.2024 US 202418963848
(71) Applicant: INTEL Corporation, Santa Clara, CA 95054 (US)
(72) Inventor: AGARWAL, Anshu, 560037 Bangalore KA (IN); HEGDE, Mythili, 560078 Kumaraswamy Layout Bangalore (IN); DEVEGOWDA, Chandrashekar, 571403 Bangalore Karnataka (IN); ARORA, Tarun, 560066 Bengaluru, Karnataka (IN); KROVVIDI, Srinivas, 500090 Hyderabad, Telengana (IN); BANGALORE RADHAKRISHNA, Vinay Prasad, 560068 Bangalore, Karnataka (IN)
(74) Representative: 2SPL Patentanwälte PartG mbB

(57) **Abstract**

A method and system for deterministic communications between a plurality of interconnected semiconductor chips. The system includes a plurality of semiconductor chips, and a controller coupled to each of the plurality of semiconductor chips, respectively. The controller is configured to transfer data from one semiconductor chip to another. Each of the semiconductor chips and the controller include a respective clock, and the controller is configured to synchronize the clocks of the plurality of semiconductor chips. The controller schedules and manages data flows from and to the plurality of semiconductor chips for deterministic communications between the plurality of semiconductor chips. The controller may implement IEEE Time Sensitive Networking (TSN) protocol for scheduling and managing the data flows between the plurality of semiconductor chips.

## Description

### Background

A system, such as a computer, may include multiple semiconductor chips that are interconnected through wired or wireless connections. The interconnected chips (e.g., in the computer) may communicate each other to run time-critical applications. However, the chips in the conventional system are not synchronized and do not have the bounded latency required for time critical deterministic communications. This can lead to issues, such as variable latency, jitter, reliability, and synchronization issues.

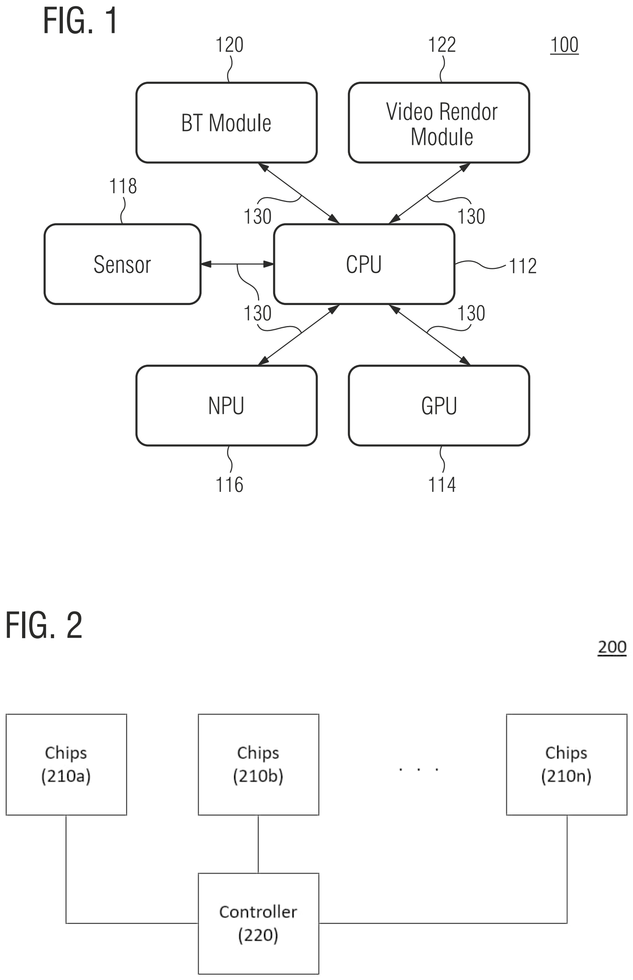

FIG. 1 shows a conventional system including a plurality of interconnected semiconductor chips. The chips may be a central processing unit (CPU) 112, a graphics processing unit (GPU) 114, a neural processing unit (NPU) 116, a sensor 118, a Bluetooth module 120, a video rendering module 122, or the like. The semiconductor chips are connected via wired interconnects 130. The interconnected chips are connected via high-speed connections, such as Peripheral Component Interconnect Express (PCIe), NVLink, Compute Unified Device Architecture (CUDA), Message Queuing Telemetry Transport (MQTT), etc. However, these connections are not deterministic and lead to wait cycles. If wireless interconnects are used for interconnecting the chips, the issues will be more pronounced. The conventional communication solutions for various interconnected chips have inefficacies. The chips may not be synchronized, which can lead to compromised coordination and data integrity. The chips may have variable latency, which leads to inconsistent communication delays and increased wait cycles. Conventional solutions have non-deterministic communication and degrade user interface for time critical use cases.

### Brief description of the Figures

Some examples of apparatuses and/or methods will be described in the following by way of example only, and with reference to the accompanying figures, in which
FIG. 1 shows a conventional system including a plurality of interconnected semiconductor chips;
FIG. 2 is a block diagram of an example system of interconnected semiconductor chips that is configured for deterministic communications between the interconnected semiconductor chips;
FIG. 3 shows an example system 300 of interconnected semiconductor chips with a Time Sensitive Networking (TSN) framework;
FIG. 4 shows an example system including a plurality of semiconductor chips that are interconnected wirelessly along with TSN framework;
FIG. 5 shows clock drift between two interconnected chips;
FIG. 6 shows bounded latency;
FIG. 7 shows an example system with hardware-based TSN;
FIG. 8 shows an example system with software-based TSN;
FIG. 9 is a flow diagram of an example process for deterministic communications between a plurality of interconnected semiconductor chips in a system;
FIG. 10 shows a high-level signal processing flow for an example use-case in a system of interconnected chips with TSN framework;
FIG. 11 illustrates a user device in which the examples disclosed herein may be implemented; and
FIG. 12 illustrates a base station or infrastructure equipment radio head in which the examples disclosed herein may be implemented.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B. An alternative wording for the same combinations is "at least one of A and B". The same applies for combinations of more than 2 elements.

The terminology used herein for the purpose of describing particular examples is not intended to be limiting for further examples. Whenever a singular form such as "a," "an" and "the" is used and using only a single element is neither explicitly nor implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

Examples are disclosed herein for a method and system for deterministic communication between interconnected semiconductor chips in a system. FIG. 2 is a block diagram of an example system of interconnected semiconductor chips that is configured for deterministic communications between the interconnected semiconductor chips. Deterministic communication is communication that its timing can be guaranteed within a certain margin of error. Deterministic communication provides a measure of reliability that the communication will not only be correct but will happen in a specified time.

The system 200 includes a plurality of semiconductor chips 210a-210n and a controller 220. A semiconductor chip may be simply referred to as a "chip" and the terms "semiconductor chip" or "chip" and a "component" of a compute platform may be used interchangeably. For example, the chips 210a-210n may be a CPU, a GPU, a NPU, a sensor, a hardware accelerator, a wireless communication module, a video rendering module, or the like. In examples, the system 200 may be a computer and the chips 210a-210n may be components of the computer. The controller 220 may be integrated into a CPU or alternatively may be a separate hardware processor or circuitry.

The controller 220 is coupled to each of the plurality of semiconductor chips 210a-210n, respectively. FIG. 2 shows as an example that each of the plurality of semiconductor chips 210a-210n is coupled to the controller 220 via a wire. For example, the semiconductor chips 210a-210n may be connected to the controller 220 via high-speed connections such as PCIe, NVLink, CUDA, MQTT, etc. Alternatively, the plurality of semiconductor chips 210a-210n may be coupled to the controller 220 wirelessly. The wireless connections between the controller 220 and the semiconductor chips 210a-210n may be based on Wi-Fi or Bluetooth protocols, etc. In a hybrid system, the wire and wireless connections may be used both for the connections between the semiconductor chips 210a-210n and the controller 220.

The controller 220 controls and manages data traffic between the semiconductor chips 210a-210n. The controller 220 is configured to transfer data from one semiconductor chip (e.g., chip 210a) to another (e.g., chip 210b) such that data (e.g., data packets) may be transferred from one chip (e.g. chip 210a) to another chip (e.g., chip 210b) via the controller 220. Each of the plurality of semiconductor chips 210a-210n and the controller 220 include a respective clock for maintaining and controlling timing for transmission and reception of data packets and data packet processing, etc. Each of the plurality of semiconductor chips 210a-210n and the controller 220 may add a timestamp in a data packet before transmission. The controller 220 is configured to synchronize the clocks of the plurality of semiconductor chips 210a-210n so that all the semiconductor chips 210a-210n and the controller 220 can have the same time reference. For example, the clocks of the plurality of semiconductor chips 210a-210n and the controller 220 may be synchronized by exchanging messages each other via the controller 220 in accordance with a Precision Time Protocol (PTP) or Network Time Protocol (NTP), or the like. The controller 220 is configured to schedule and manage data flows from and to the plurality of semiconductor chips 210a-210n for deterministic communications between the plurality of semiconductor chips 210a-210n.

The controller 220 may be implemented by hardware or software. For example, in case of hardware-based implementation, the controller 220 may include a network interface card and a switch. The network interface card may be configured to manage the traffic between the interconnected chips 210a-210n to maintain deterministic, synchronized communications. The network interface card may be configured to perform scheduling and resource reservation for the data flows between the plurality of semiconductor chips 210a-210n. The switch may be configured to manage and route data traffic between the plurality of semiconductor chips 210a-210n for deterministic communications between the plurality of semiconductor chips 210a-210n. Alternatively, the controller 220 may be a Software-Defined Networking-based (SDN-based) software entity.

In examples, for deterministic communications between the plurality of semiconductor chips 210a-210n for time critical applications and use cases, IEEE Time-Sensitive Networking (TSN) protocol may be implemented in the system 200 for managing timing and synchronization of data packets transmitted between the plurality of semiconductor chips. TSN may be integrated in the system for deterministic communication with time synchronization, bounded latency, and priority handling. Implementing a novel scalable hardware-based or SDN-based TSN framework in the system 200 offers a robust solution for achieving deterministic communications in platforms having a plurality of interconnected chips (via wire or wirelessly) and ensures reliable, time-critical intercomponent communication, which is also adaptable to wireless interconnects.

TSN is a set of standards under development by the Time-Sensitive Networking task group of the IEEE 802.1 working group for defining mechanisms for deterministic communications. TSN ensures guaranteed data transport with bounded low latency, low delay variation, and extremely low loss. In TSN, various protocols address the key features of time synchronization, high availability and reliability, bounded low latency, and resource management, etc. TSN utilizes a number of different techniques to enable real-time communication in the networks.

All devices in a TSN network need to have the same time reference and synchronize their clocks with each other. TSN uses protocols such as IEEE 1588 and 802.1AS to synchronize the clocks of different components on the network, ensuring that all components in the network have a common reference point for time. This is for ensuring that data is transmitted and received at the correct time. IEEE 1588 protocol is PTP used to synchronize clocks on a computer network. In examples, the interconnected chips 210a-210n may be synchronized by using the PTP or NTP protocols.

TSN uses quality of service (QoS) mechanisms such as priority-based scheduling and traffic shaping to ensure that time-critical traffic is given priority over other traffic on the network. This helps reduce latency and improve the reliability of time-sensitive communications. In traditional Ethernet, the communication delay of data flows is unpredictable, and this can cause data flows to lack the real-time feature. TSN ensures the arrival and low-delay transmissions of time-sensitive flows. TSN implements traffic shaping to optimize the transmission of time-sensitive flows, best effort flows, and other data flows on the network to meet their requirements on transmission time. In examples, the controller 220 (e.g., a hardware NIC and switch, or a software-based controller) manages and controls traffic between the interconnected chips while implementing the TSN priority-based scheduling and traffic shaping mechanisms.

The timeliness and high reliability of data transmission need to be ensured for applications that have high requirements on real-time data transmission. TSN supports the use of redundant links and protocols, such as rapid spanning tree protocol (RSTP) and multiple spanning tree protocol (MSTP), to provide multiple paths for time-critical traffic to follow, improving the reliability of the network. The dual-link redundancy feature of TSN prevents packet loss caused by congestion, reduces the probability of packet loss caused by device faults, and shortens the fault recovery time, improving network reliability. In examples, the controller 220 (hardware NIC and switch or software-based controller) may implement the dual-link redundancy feature for reliable delivery of data packets between the interconnected chips. TSN also includes mechanisms for ensuring the security of time-sensitive communications, such as the use of encryption and authentication protocols.

For clock synchronization, PTP or NTP may be implemented for consistent timing across all chips in the system. In examples, the controller 220 may schedule transmissions of data packets to and from the chips based on priority assigned to each data packet and prioritize high-priority data to ensure timely delivery of data. The controller 220 may apply frame preemption and time-aware scheduling to reduce delays. Frame preemption is a feature that allows higher priority data frames to interrupt the transmission of lower priority data frames. Frame preemption can be used for prioritizing time-critical data that requires low latency. High-priority frames may contain time-critical data that must be delivered with minimal delay. The controller 220 may apply frame preemption to ensure that the high-priority frames are given priority over lower priority frames, reducing the latency of their transmission.

The system 200 may use redundancy and real-time monitoring for reliable data transmission and synchronization. To guarantee the delivery of data frames in a network, TSN supports redundancy by selectively duplicating frames at the sender and then discarding the duplicate at the destination. The controller 220 may duplicate the packet transmissions to ensure delivery.

Real-time monitoring in TSN for interconnected chips enables the system to maintain high reliability through continuous assessment and adjustment of network paths, traffic prioritization, frame redundancy, synchronization accuracy, and component health. The controller 220 uses this real-time data to dynamically reconfigure paths, duplicate packets, and adjust priorities, ensuring smooth, deterministic, and synchronized data flow across interconnected chips.

### Network Path and Link Quality Monitoring

The system 200 may monitor network paths for quality indicators such as latency, jitter, packet loss, and bandwidth availability. If real-time monitoring detects degradation in any of these parameters (e.g., increased latency or packet loss on a specific path), the controller 220 can dynamically reconfigure the network paths, reassigning high-priority traffic to paths with better performance to ensure reliability.

TSN allows each chip to communicate over multiple redundant paths. If real-time monitoring reveals that a primary path is failing or performing below required standards, the controller 220 can immediately activate backup paths to maintain seamless communication and avoid data loss.

### Packet Duplication and Failover Management

The TSN framework uses redundancy by duplicating data packets at the sender level. Real-time monitoring allows the system to determine which duplicate packets have been successfully delivered, so it can discard any unnecessary duplicates at the destination. This not only reduces network congestion but also ensures reliable delivery without excess overhead.

If a specific packet or frame does not reach the intended destination (e.g., due to a path failure detected through monitoring), the controller 220 can automatically initiate additional duplications or reroute packets to alternative paths to guarantee data delivery.

### Traffic Priority Adjustment and Scheduling

TSN allows for prioritization of traffic based on criticality, where real-time monitoring observes and records traffic conditions to optimize resource allocation across interconnected chips. If the system detects increased demand on specific paths or nodes, the controller 220 can adjust the priorities of transmitted frames, temporarily elevating the priority of essential data to reduce latency.

Real-time monitoring also supports dynamic scheduling adjustments. For example, if certain chips require increased bandwidth or more frequent updates, the controller can reallocate resources, ensuring that data flows smoothly without interruptions across chips.

### Synchronization and Clock Drift Correction

Precise timing is vital in a TSN network, especially when multiple chips must act in unison. Real-time monitoring checks for any discrepancies in timing between interconnected chips, such as clock drift or synchronization errors.

If such discrepancies are detected, the controller 220 can adjust the synchronization signals sent to each chip, recalibrating them in real time to maintain perfect alignment. This ensures that all chips remain synchronized, with data arriving precisely when needed for coordinated tasks.

### Device and Link Health Monitoring

Real-time monitoring also involves checking the health of individual chips, controllers, and network links. If a chip or network link shows signs of potential failure, such as unexpected error rates or increased processing delays, the controller can reassign tasks or redistribute load across healthier components. This proactive monitoring enhances fault tolerance and ensures reliable communication and processing within the network.

TSN surpasses the current state of the art by providing deterministic latency and precise time synchronization, ensuring reliable, low-latency communication and seamless coordination between wireless interconnect chips. The solution disclosed herein is scalable to wired and wireless interconnected chips (e.g., CPUs, NPUs, GPUs, various wireless modules, sensors, other wired or wireless interconnected chips or components, or the like). This results in improved real-time AI processing, fault tolerance, and scalability, which conventional high-speed interconnects and software frameworks cannot fully achieve.

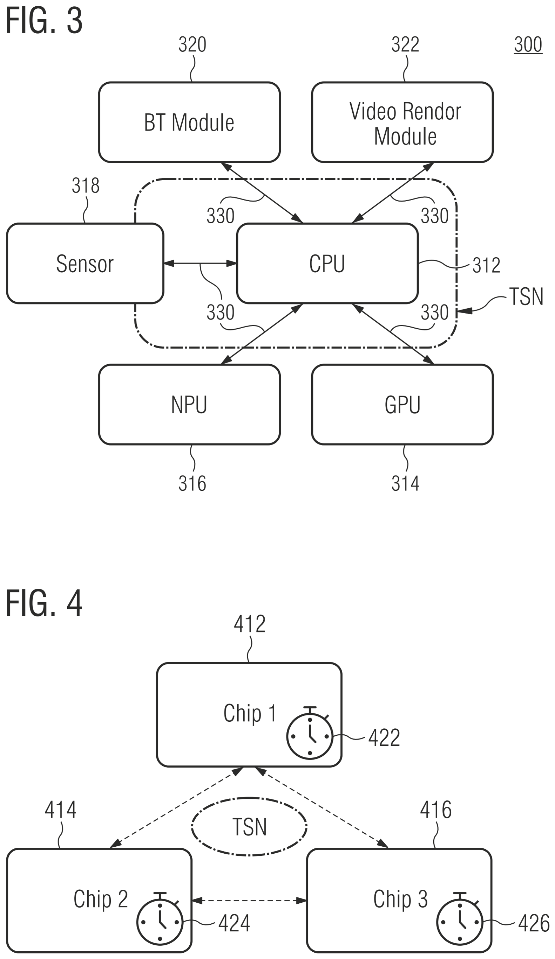

FIG. 3 shows an example system 300 of interconnected semiconductor chips with a TSN framework. The system 300 includes a plurality of interconnected chips (components). In this example, the interconnected chips of the system 300 are a CPU 312, a GPU 314, an NPU 316, a sensor 318, a Bluetooth module 320 (alternatively, a Wi-Fi module), and a video render module 322, but may include additional chips/components (e.g., a hardware accelerator, or the like). The interconnects 330 for interconnecting the chips 312-320 may be wired connections or wireless connections. For examples, the chips may be connected via high-speed connections such as PCIe, NVLink, CUDA, MQTT, etc.

In one example, the system 300 may be a computer (e.g., an artificial intelligence personal computer (AIPC) or the like) and the interconnected chips 312-322 may be components of the computer. AIPCs represent a new generation of personal computers with dedicated AI acceleration, including a CPU, a GPU, and an NPU, all designed to handle AI workloads more efficiently by working in concert. AIPCs use artificial intelligence technologies to elevate productivity, creativity, gaming, entertainment, security, and more. AIPCs should ensure that data generated by multiple chips (local sensors, internal devices, such as GPUs and AI accelerators) is transferred with minimal delay and high reliability. This is needed for real-time applications like video analytics, autonomous systems, and other AI-driven processes that rely on instantaneous data processing and decision-making.

In examples, the chips 312-322 interconnected in the system 300 leverage TSN for communications therebetween. TSN is implemented in the system 300 to ensure bounded low latency, precise synchronization, reliable data transmission, and deterministic communication for enhancing performance and user experience across various applications (e.g., AI applications). The features of TSN may be implemented for wired and wireless communications among the interconnected chips of the system to ensure deterministic communication among the interconnected chips.

FIG. 4 shows an example system including a plurality of semiconductor chips that are interconnected wirelessly along with TSN framework. In FIG. 4, the chips 412, 414, 416 are connected wirelessly via Bluetooth, Wi-Fi, or the like. The interconnected chips 412, 414, 416 leverage TSN for communications therebetween. For example, each chip 412, 414, 416 includes a clock 422, 424, 426, respectively, and the clocks 422, 424, 426 of the chips 412, 414, 416 may be synchronized via TSN. The example schemes disclosed herein are applicable to both wired and wireless interconnections and hybrid interconnects as well.

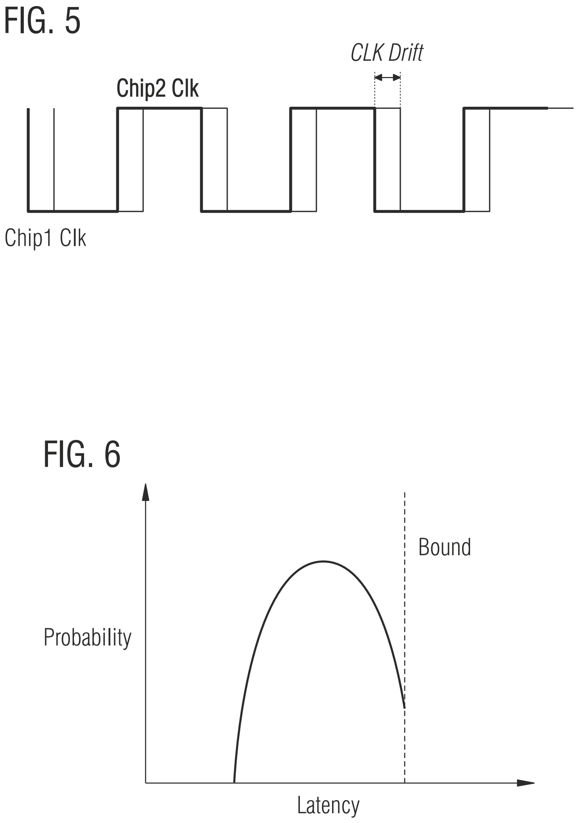

FIG. 5 shows clock drift between two interconnected chips. Two chips may exhibit a clock drift, meaning that each chip has its own sense of time. This lack of synchronization between chips can lead to compromised coordination and data integrity. The example schemes disclosed herein ensure that the clock drift is corrected (e.g., via PTP or NTP) and all chips and components participating in TSN communication have the same understanding of time.

FIG. 6 shows bounded latency. The x-axis of the graph is latency, and the y-axis of the graph is probability. The curve in FIG. 6 represents how likely different latencies are to occur. The dashed line labeled "Bound" marks a maximum acceptable latency. Most latencies fall under the peak of the curve, with fewer occurrences as latency increases. The "Bound" line indicates the threshold beyond which performance may be unacceptable. TSN ensures bounded latency whereas the state-of-art solution provides variable latency leading to inconsistent communication delays and increased wait cycle.

Example systems of inter-connected components/chips implementing TSN are explained below. As an example, the system will be explained with reference to a wearable augmented reality (AR) system (e.g., AR glasses) powered by a computer including a plurality of interconnected chips. However, it should be noted that the reference to the wearable AR system is merely an example, and the system may be applied for any applications. In examples, the inter-connected chips in the system leverage TSN for communications. The TSN may be implemented hardware-based or software-based.

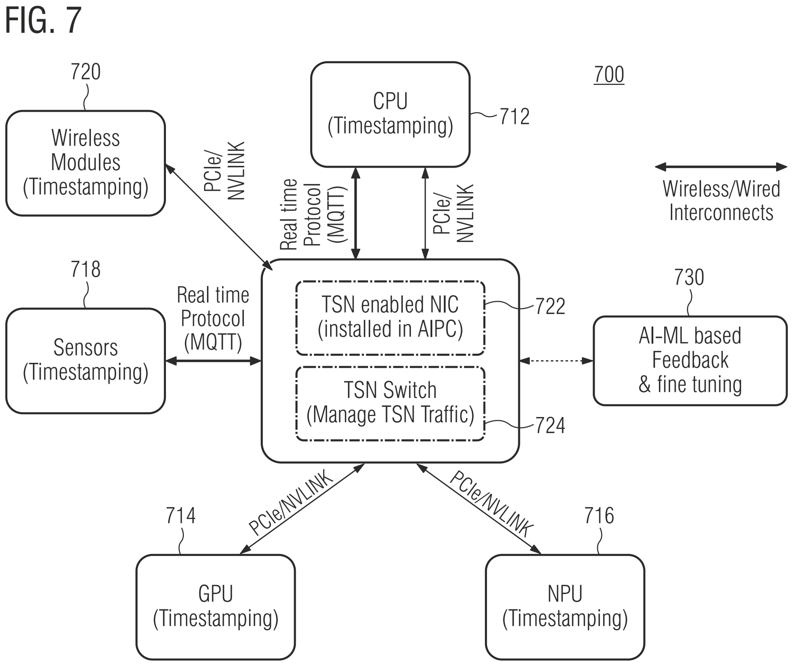

FIG. 7 shows an example system with hardware-based TSN. The system 700 in this example includes a plurality of chips such as a CPU 712, a GPU 714, an NPU 716, a sensor 718, and a wireless communication module 720 (e.g., Wi-Fi, Bluetooth, etc.). The system 700 may include additional components, chips, or devices. These chips 712-720 may be interconnected wirelessly or via a wire. The chips 712-720 collaborate in real-time to provide an immersive AR experience with AI-driven enhancements. For implementation of TSN, the system 700 may further include a TSN-enabled network interface card (NIC) 722 and a TSN switch 724. The TSN framework ensures deterministic communication between the inter-connected chips/components, enabling synchronized, real-time processing and interaction.

The CPU 712 manages the overall operation of the AR system, including handling user interactions and processing input data. The GPU 714 renders AR visuals in real-time, ensuring smooth and high-quality graphics. The NPU 716 executes AI algorithms for features such as object recognition, natural language understanding, adaptive content generation, and the like. The sensor 718 may capture real-time data and communicate it with the CPU 712, the GPU 714, and/or the NPU 716. The wireless communication module 720 provides communications between the wearable device and external peripherals (e.g., headsets) or the cloud for additional processing power or data.

In examples, each chip (e.g., the CPU 712, the GPU 714, the NPU 716, the sensor 718, the wireless communication module 720) may be connected to the TSN-enabled NIC 722 wirelessly or via a wire. If wireless connection is used, technologies such as Wi-Fi 6, Wi-Fi 7, or Bluetooth 5 may be used as an example, which are capable of high throughput and low-latency communication. The wireless communication module 720 is used for communication with external peripherals and cloud interactions and may also be leveraged for communication of wireless interconnects. The wireless communication module 720 may enable the chips (e.g., the CPU 712, the GPU 714, the NPU 716, the sensor 718) to communicate with each other, as well as with external devices or cloud services, without relying on traditional wired connections. To use the wireless communication module 720 (e.g., Wi-Fi module) in the system for internal communications between the chips (e.g., the CPU 712, the GPU 714, the NPU 716, the sensor 718), the multi-channel and multi-link capabilities of Wi-Fi 6 or 7 can be used to establish simultaneous, high-bandwidth connections between the chips. This involves configuring the wireless module 720 to treat the chips 712, 714, 716, 718 as peers, using separate channels or frequency bands for each communication stream, and optimizing for low latency and high throughput. When using Wi-Fi 6 or Wi-Fi 7 for internal communication between the CPU, GPU, and NPU chips, etc. in the system, the connection may be mediated by the Wi-Fi module. The Wi-Fi module facilitates communication by treating each chip as a peer and leveraging Wi-Fi 6/7's multichannel and multi-link capabilities. This enables simultaneous, high-bandwidth data flows on separate channels or frequency bands, thus optimizing throughput and reducing latency. In this arrangement, the TSN-enabled NIC (or the TSN controller in case of software implementation) manages QoS, ensuring deterministic communication by prioritizing data according to timing and bandwidth needs. This traffic management function helps ensure that different data types (such as control signals and large data transfers) operate smoothly on the same network. Together, these technologies enable a flexible, efficient, and high-performance communication architecture between the chips, essential for modern computing tasks that require seamless, low-latency data processing across multiple units.

The TSN-enabled NIC 722 is embedded within the system 700 (e.g., AIPC) for inter-component communication. The TSN-enabled NIC 722 manages the TSN traffic between the inter-connected chips 712-720 to maintain deterministic, synchronized communications among the chips 712-720. Synchronized communication means that all interconnected chips (e.g., 712-720) operate in precise alignment with each other's timing, which is achieved by maintaining a shared time reference across the system. This synchronization is essential for applications where operations across chips need to occur at specific intervals, such as in real-time control systems, industrial automation, or high-performance computing tasks, etc. Synchronized communication involves aligning all chips to a master clock or a coordinated timebase, enabling them to transmit and receive data at predetermined intervals. This prevents timing discrepancies between chips, ensuring that data is processed in a coordinated and predictable manner across the network. The TSN-enabled NIC 722 enables TSN capabilities such as time synchronization, traffic scheduling, and resource reservation, and the like of the TSN protocol. The TSN-enabled NIC 722 enhances the connections between the chips (e.g., PCIe, NVLink, MQTT, etc.) with timestamping and traffic management.

Timestamps allow each data packet to carry a precise time label, which helps in ensuring the correct sequence of events across different chips. For instance, if multiple chips generate or process data at different times, timestamps enable the system to reconstruct the exact order in which events occurred, maintaining a consistent view of operations across the system.

Chips can use timestamps to measure transmission latencies accurately. For example, if a chip detects a longer-than-expected delay based on the timestamps, it can alert the controller to make routing adjustments to maintain the required latency levels.

Timestamps help chips determine the validity of data. For example, in applications requiring frequent updates, data received with an outdated timestamp may be discarded, ensuring only the latest data is used for processing. This enables chips to handle time-sensitive data more effectively, maintaining synchronization without processing outdated information.

Timestamps allow chips to initiate or schedule data transmissions in sync with other chips, helping to avoid network congestion and ensuring that critical data is transmitted precisely when needed.

The TSN switch 724 manages and routes TSN traffic between the chips. The TSN switch 724 provides deterministic communications and synchronization across the network. The TSN-enabled NIC 722 and the TSN switch 724 synchronize all interconnected chips to a shared timebase using TSN protocols (e.g., IEEE 802.1AS for time synchronization). This provides each chip with a highly accurate and consistent view of time, enabling deterministic communication where each operation can be triggered at exact intervals.

The TSN-enabled NIC 722 uses traffic scheduling protocols (e.g., IEEE 802.1Qbv) to establish precise transmission windows for each chip, where data is sent at specific, predetermined times. This scheduling eliminates random queuing delays, ensuring that data flows occur at set intervals.

The TSN framework, through resource reservation (e.g., IEEE 802.1Qat), reserves specific network resources like bandwidth or dedicated paths for critical traffic. This reservation ensures that essential data has guaranteed bandwidth, regardless of network congestion, allowing for consistent and reliable data transfer between chips.

To avoid packet loss, the TSN switch 724 can duplicate critical packets to maintain redundancy, discarding duplicates once successful delivery is confirmed. This error-checking mechanism, combined with packet redundancy, ensures that even if one transmission fails, an alternative packet path or copy ensures delivery.

The TSN-enabled NIC 722 and TSN switch 724 continuously monitor network conditions. If latency or packet loss thresholds are reached, they can dynamically re-route or adjust traffic flows to maintain deterministic communication, ensuring that timing guarantees are upheld for each data flow.

Deterministic, synchronized communication among interconnected chips in the TSN framework is achieved by time synchronization, precise scheduling, resource reservation, and real-time monitoring, allowing each chip to operate within strict timing constraints. Timestamps play a crucial role by enabling the ordering, validation, and coordination of data flows across the system, ensuring reliable and predictable communication for time-sensitive applications.

In examples, the connections between the chips (e.g., PCIe, NVLink, MQTT, etc.) maintain efficient data transfer while the TSN-enabled NIC 722 and the TSN switch 724 ensure reliable, time-sensitive deterministic communication.

To implement TSN for inter-component communications between the chips 712-720, all components/chips of the system 700 may implement timestamping. Timestamping refers to marking data packets with the exact time they occurred or were processed. The timestamp is used for network synchronization, latency and delay measurement, event sequencing and logging, QoS management, etc. PTP and NTP use timestamping to synchronize clocks across network devices. For example, the chips of the system 700 (i.e., the CPU 712, the NPU 714, the GPU 716, the sensor 718, and the wireless communication module 720) and the TSN-enabled NIC 722 may use high-resolution timers, performance counters, and/or synchronized clocks (via PTP/NTP) for precise and consistent time reference and add a timestamp to data packets each chip transmits. This ensures that all chips in the system 700 have the same time understanding.

The AI-based (or machine learning (ML)-based) feedback block 730 may (continuously) adjust the system for optimal performance based on real-time feedback. The AI/ML-based feedback block 730 may optimize TSN in the system (e.g., AIPC) by dynamically managing traffic, predicting network issues, and fine-tuning resources to enhance real-time application performance and reliability.

AI/ML-based feedback block 730 plays a critical role in optimizing TSN-enabled communications across the interconnected system by utilizing real-time data to adjust dynamically. Some examples of feedback mechanism are explained below.

Traffic flow may be adjusted based on network load. Real-time data on network congestion, bandwidth usage, and latency across different paths may be collected from TSN-enabled NICs and switches. The AI/ML-based feedback block 730 may adjust traffic routing paths and transmission rates based on this data, prioritizing or rerouting traffic away from congested paths. For example, if the feedback indicates high traffic on a primary path, the AI/ML-based feedback block 730 may reroute lower-priority data to alternative paths to ensure that critical data remains unaffected by delays. The feedback originates from network monitoring sensors within the NICs, switches, and other interconnected components that track traffic volume, bandwidth utilization, and latency in real-time.

Predictive maintenance may be performed for network reliability. Historical data on network behavior combined with current metrics like error rates, packet retransmissions, and link health indicators are analyzed to identify patterns that may signal potential issues. The AI/ML-based feedback block 730 may preemptively adjust network configurations, such as increasing redundancy or reassigning traffic flows, to prevent predicted issues from affecting performance. For instance, if certain links are frequently near capacity or experiencing increased error rates, the system may reroute critical data or duplicate transmissions to avoid potential failures. This feedback comes from continuous monitoring by the TSN-enabled NICs and switches, which report anomalies or trends that the AI/ML model analyzes for predictive insights.

Resource allocation and bandwidth reservation may also be performed. Real-time requirements for bandwidth, latency sensitivity, and data prioritization, especially from applications running on the interconnected chips, inform the AI/ML-based feedback block 730 about current demand levels. The AI/ML-based feedback block 730 can allocate bandwidth dynamically to different data streams based on application demands. For example, if a real-time application suddenly requires more bandwidth due to an increase in processing load, the AI/ML-based feedback block 730 can prioritize this traffic by reserving more bandwidth, ensuring consistent performance. Real-time application performance metrics, including data throughput needs and latency sensitivity, provide feedback, allowing the AI/ML-based feedback block 730 to tune network resources to match real-time application demands.

Latency and synchronization fine-tuning may be performed. The system monitors time synchronization accuracy and packet latency across the interconnected components, identifying any deviations from target timing requirements. Based on this feedback, the AI/ML-based feedback block 730 can adjust time synchronization intervals or re-prioritize traffic flows to minimize latency. For instance, if increased latency is detected in critical data flows, the AI/ML-based feedback block 730 may assign higher priority to these flows, reducing their waiting time in queues and ensuring they meet timing requirements. The TSN-enabled NICs and switches provide feedback on synchronization accuracy and latency metrics, which the AI/ML-based feedback block 730 analyzes to make timing and priority adjustments.

In summary, the AI/ML-based feedback block 730 continuously optimizes TSN performance by collecting real-time feedback on network load, error rates, bandwidth demands, and timing accuracy. This data is sourced from network monitoring tools embedded in the TSN-enabled NICs and switches. The feedback block then uses this information to make predictive adjustments, allocate resources, and manage traffic dynamically, thereby enhancing real-time performance, reliability, and efficiency of the TSN-enabled interconnected system.

In examples, the TSN framework is applied to manage the timing and synchronization of data packets transmitted between the connected chips (wirelessly or via a wire). This ensures that the data exchange is deterministic, with minimal jitter and latency, which is critical for maintaining a seamless AR experience. For example, the NPU 716 may process user gestures detected by sensors 718 in the AR glasses and send instructions to the GPU 714 to render appropriate visual effects. The wireless communication module 720 (e.g., Bluetooth or Wi-Fi) may be used for communication with the external peripherals or the cloud. TSN ensures that these instructions are executed in real-time, with precise timing across the wireless links.

The AR system may provide real-time visual and auditory feedback to the user, with AI-enhanced features such as voice commands or gesture recognition being processed by the NPU 716 and displayed by the GPU 714, all in perfect synchronization due to TSN. Wireless communication enables greater flexibility in device design, allowing the AR system to be more lightweight and portable. TSN ensures that despite the wireless interconnections, the latency and synchronization between the chips are tightly controlled. This provides the user with a smooth, responsive AR experience where AI-driven interactions happen instantaneously and without noticeable delays.

Alternatively, TSN may be implemented using Software-Defined Networking (SDN). SDN is an approach to networking that uses software-based controllers or application programming interfaces (APIs) to communicate with underlying hardware infrastructure and direct traffic on a network. SDN allows network administrators to manage and configure network services through software, rather than relying on traditional hardware-based solutions. SDN achieves this by separating the network's control plane which decides where data should be sent from the data plane which actually moves the data. In examples, TSN and SDN are combined, and this combination can enhance network performance and flexibility, particularly in environments that require low latency, high reliability, and deterministic communication for wired/wireless interconnected chips.

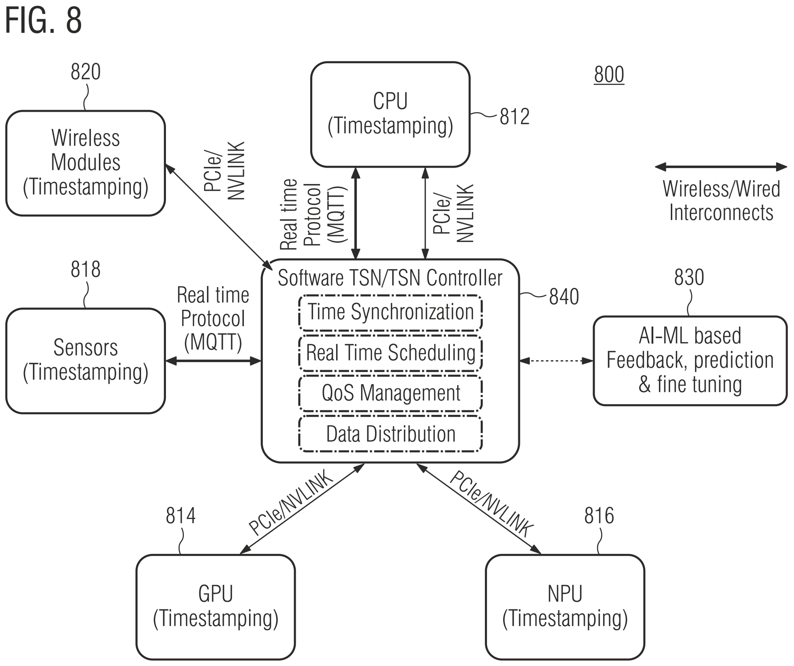

FIG. 8 shows an example system with software-based TSN. The system in FIG. 8 is same as the system in FIG. 7 except that the TSN-enabled NIC and TSN switch are replaced with the software TSN/TSN controller. The system 800 includes a plurality of chips such as a CPU 812, a GPU 814, an NPU 816, a sensor 818, and a wireless communication module 820 (e.g., Wi-Fi, Bluetooth, etc.) that are interconnected wirelessly or via a wire. The system 800 may include additional components, chips, and devices. The chips 812-820 collaborate in real-time to provide an immersive AR experience with AI-driven enhancements. For implementation of TSN, the system 800 includes a software TSN/TSN controller 840.

The sensor 818 may capture real-time data and communicate it with the central controller using MQTT, ensuring that the data is synchronized with the rest of the system 800. The CPU 812, the GPU 814, and the NPU 816 also communicate with the software TSN/TSN controller 840 via PCIe/NVLINK, ensuring high-speed, low-latency data transfer. The wireless module 820 may enable these chips (e.g., the CPU 812, the GPU 814, the NPU 816, and the sensor 818) to communicate with each other, as well as with external devices or cloud services, without relying on traditional wired connections.

The software TSN/TSN controller 840 is a core component in this example solution. The software TSN/TSN controller 840 synchronizes and schedules the data processing across all components, managing QoS and distributing data efficiently. The software TSN/TSN controller 840 manages and synchronizes the communication between all the chips in the system 800. The software TSN/TSN controller 840 ensures that all chips operate in a time-synchronized manner, minimizing latency and improving coordination. The software TSN/TSN controller 840 manages the scheduling of tasks and data flows to ensure that critical tasks are prioritized and executed in a timely manner. The software TSN/TSN controller 840 performs QoS management and ensures that data flows are handled according to their importance, guaranteeing the performance of critical tasks. The software TSN/TSN controller 840 also performs data distribution. The software TSN/TSN controller 840 manages the distribution of data between the chips 812-820 of the system 800, ensuring that each chip receives the data it needs at the right time.

The AI-based (or ML-based) feedback block 830 may (continuously) adjust the system for optimal performance based on real-time feedback. The AI/ML-based feedback block 830 may optimize TSN in the system (e.g., AIPC) by dynamically managing traffic, predicting network issues, and fine-tuning resources to enhance real-time application performance and reliability.

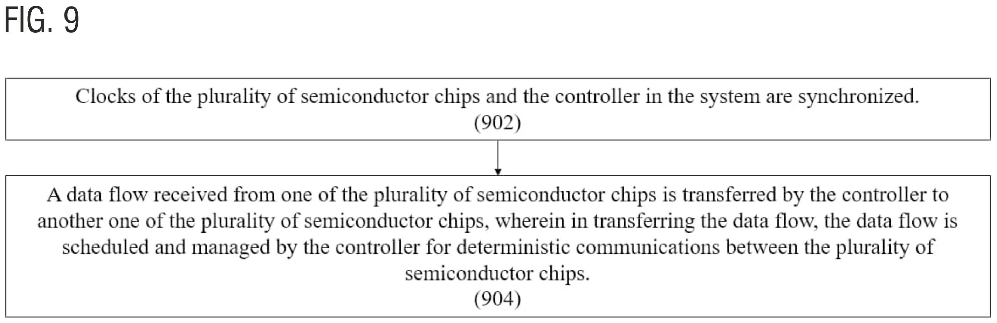

FIG. 9 is a flow diagram of an example process for deterministic communications between a plurality of interconnected semiconductor chips in a system. In the system, each of the plurality of semiconductor chips is coupled to a controller, respectively. The chips may be coupled to the controller wirelessly (e.g., Wi-Fi or Bluetooth protocol) or via a wire. The semiconductor chips may be a CPU, a GPU, an NPU, a sensor, a hardware accelerator, a wireless communication module, or a video rendering module, etc. Each of the plurality of semiconductor chips and the controller include a respective clock. Clocks of the plurality of semiconductor chips and the controller are synchronized (902). For example, the clocks may be synchronized by using NTP or PTP.

The controller transfers data from one semiconductor chip to another. A data flow received from one of the plurality of semiconductor chips is transferred by the controller to another one of the plurality of semiconductor chips (904). In transferring the data flow, the data flow is scheduled and managed by the controller for deterministic communications between the plurality of semiconductor chips. In the system, IEEE TSN protocol may be implemented for scheduling and managing the data flows between the plurality of semiconductor chips. The system may be adjusted for optimal performance based on real-time feedback. The system may be adjusted using an artificial intelligence-based module or a machine learning-based module based on the real-time feedback.

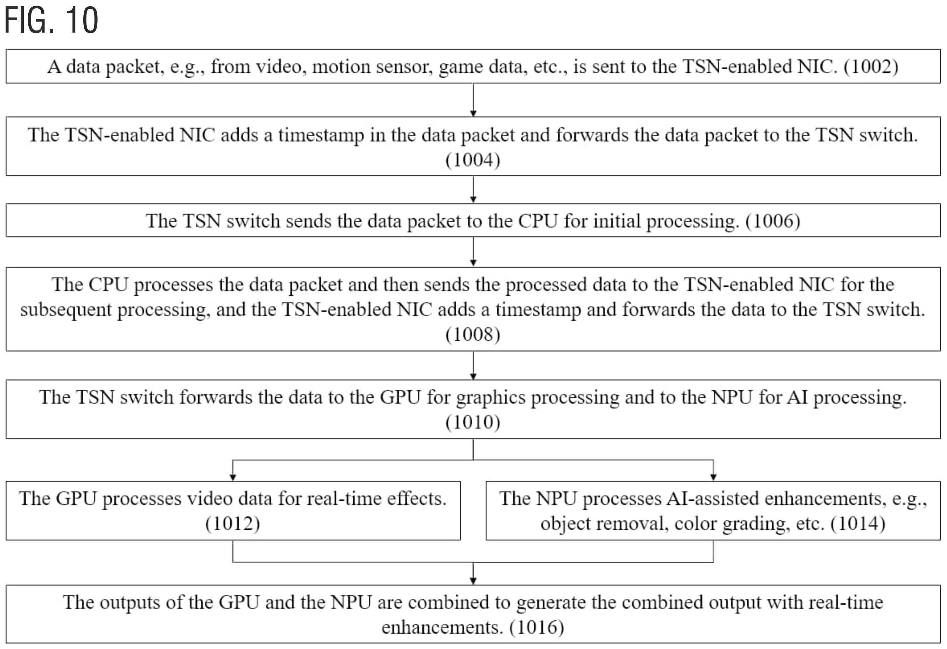

FIG. 10 shows a high-level signal processing flow for an example use-case in a system of interconnected chips with TSN framework. In FIG. 10, the infeed (e.g., from video, motion sensor, or game data, etc.) is processed by the interconnected chips and a combined output with AI enhancement is generated for the end user. FIG. 10 shows signal processing in a system of interconnected chips with hardware-based TSN framework, such as the system of FIG. 7. However, the same may be applied to the software-based TSN framework (such as the one shown in FIG. 8) as well. TSN enables synchronized and timely data exchange between the system components, ensuring real-time processing and communication. This is crucial for applications requiring precise timing and low latency, such as video processing and AI-assisted enhancements. This scheme is scalable to any wireless interconnected chips that requires communication to realize a time critical use-case.

A data packet (e.g., from video, motion sensor, game data, etc.) is sent to the TSN-enabled NIC (1002). The TSN-enabled NIC manages all traffic in the system. The TSN-enabled NIC adds a timestamp in the data packet and forwards the data packet to the TSN switch (1004). The TSN switch manages deterministic communications and synchronization. The TSN switch sends the data packet to the CPU for initial processing (1006). The CPU processes the data packet and then sends the processed data to the TSN-enabled NIC (e.g., via PCIe) for the subsequent processing, and the TSN-enabled NIC adds a timestamp and forwards the processed data to the TSN switch (1008). The TSN switch manages deterministic communications and synchronization. The TSN switch forwards the data to the GPU (e.g., via PCIe or NVLink) for graphics processing and to the NPU (e.g., via PCIe or NVLink) for AI processing (1010). The GPU processes video data for real-time effects (1012). The NPU processes AI-assisted enhancements, e.g., object removal, color grading, etc. (1014). The outputs of the GPU and the NPU are combined to generate the combined output with real-time enhancements (1016).

In examples, TSN is incorporated into the system for managing and controlling the communications between the interconnected chips. This can provide benefits of precise timing across chips/components (improved timing and coordination), low-latency communication (reduced end-to-end latency), efficient data prioritization (better prioritization of critical wireless data), reliable data transfer (more consistent wireless transmission), seamless component integration (improved effectiveness of wireless applications), integrated wired and wireless systems (enhanced performance in hybrid environments), etc.

The example schemes disclosed herein can be applied to different use cases such as real-time audio/video playing, gesture-based control/vision, edge AI and robotics, health monitoring, gaming and virtual reality (VR), etc. TSN implementation for controlling communications between interconnected chips for these use cases provide benefits of smooth playback, reduced latency, improved sensor-AI coordination, timely sensor-AI communication for real-time decisions, reliable data for vital signs and movement analysis, and lower latency and better immersion, etc.

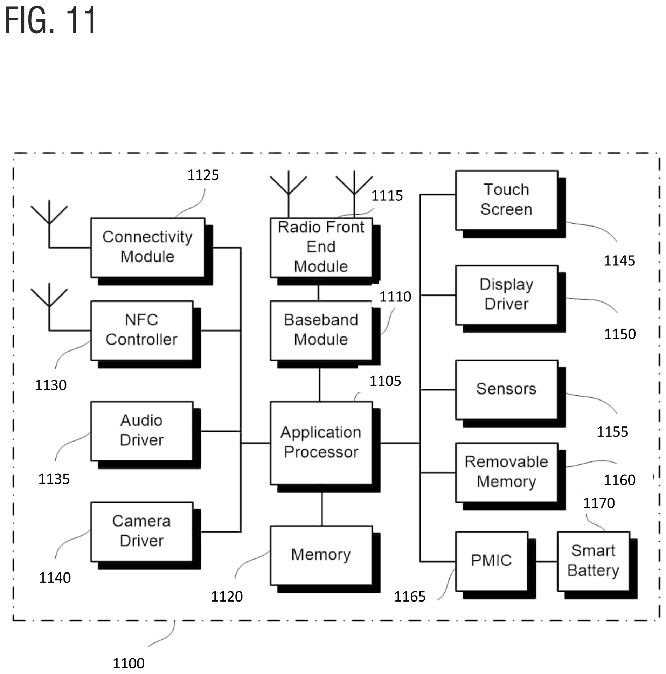

FIG. 11 illustrates a user device 1100 in which the examples disclosed herein may be implemented. For example, the examples disclosed herein may be implemented in the radio front-end module 1115, in the baseband module 1110, etc. The user device 1100 may be a mobile device in some aspects and includes an application processor 1105, baseband processor 1110 (also referred to as a baseband module), radio front end module (RFEM) 1115, memory 1120, connectivity module 1125, near field communication (NFC) controller 1130, audio driver 1135, camera driver 1140, touch screen 1145, display driver 1150, sensors 1155, removable memory 1160, power management integrated circuit (PMIC) 1165 and smart battery 1170.

In some aspects, application processor 1105 may include, for example, one or more CPU cores and one or more of cache memory, low drop-out voltage regulators (LDOs), interrupt controllers, serial interfaces such as serial peripheral interface (SPI), inter-integrated circuit (I2C) or universal programmable serial interface module, real time clock (RTC), timer-counters including interval and watchdog timers, general purpose input-output (IO), memory card controllers such as secure digital / multi-media card (SD/MMC) or similar, universal serial bus (USB) interfaces, mobile industry processor interface (MIPI) interfaces and Joint Test Access Group (JTAG) test access ports.

In some aspects, baseband module 1110 may be implemented, for example, as a solder-down substrate including one or more integrated circuits, a single packaged integrated circuit soldered to a main circuit board, and/or a multi-chip module containing two or more integrated circuits.

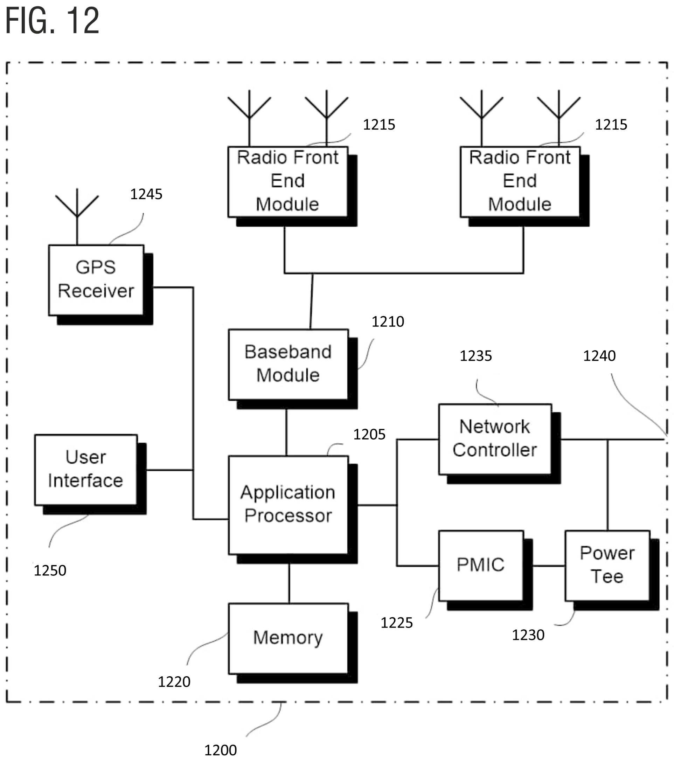

FIG. 12 illustrates a base station or infrastructure equipment radio head 1200 in which the examples disclosed herein may be implemented. For example, the examples disclosed herein may be implemented in the radio front-end module 1215, in the baseband module 1210, etc. The base station radio head 1200 may include one or more of application processor 1205, baseband modules 1210, one or more radio front end modules 1215, memory 1220, power management circuitry 1225, power tee circuitry 1230, network controller 1235, network interface connector 1240, satellite navigation receiver module 1245, and user interface 1250.

In some aspects, application processor 1205 may include one or more CPU cores and one or more of cache memory, low drop-out voltage regulators (LDOs), interrupt controllers, serial interfaces such as SPI, I2C or universal programmable serial interface module, real time clock (RTC), timer-counters including interval and watchdog timers, general purpose IO, memory card controllers such as SD/MMC or similar, USB interfaces, MIPI interfaces and Joint Test Access Group (JTAG) test access ports.

In some aspects, baseband processor 1210 may be implemented, for example, as a solder-down substrate including one or more integrated circuits, a single packaged integrated circuit soldered to a main circuit board or a multi-chip module containing two or more integrated circuits.

In some aspects, memory 1220 may include one or more of volatile memory including dynamic random access memory (DRAM) and/or synchronous dynamic random access memory (SDRAM), and nonvolatile memory (NVM) including high-speed electrically erasable memory (commonly referred to as Flash memory), phase change random access memory (PRAM), magneto resistive random access memory (MRAM) and/or a three-dimensional crosspoint memory. Memory 1220 may be implemented as one or more of solder down packaged integrated circuits, socketed memory modules and plug-in memory cards.

In some aspects, power management integrated circuitry 1225 may include one or more of voltage regulators, surge protectors, power alarm detection circuitry and one or more backup power sources such as a battery or capacitor. Power alarm detection circuitry may detect one or more of brown out (under-voltage) and surge (over-voltage) conditions.

In some aspects, power tee circuitry 1230 may provide for electrical power drawn from a network cable to provide both power supply and data connectivity to the base station radio head 1200 using a single cable.

In some aspects, network controller 1235 may provide connectivity to a network using a standard network interface protocol such as Ethernet. Network connectivity may be provided using a physical connection which is one of electrical (commonly referred to as copper interconnect), optical or wireless.

In some aspects, satellite navigation receiver module 1245 may include circuitry to receive and decode signals transmitted by one or more navigation satellite constellations such as the global positioning system (GPS), Globalnaya Navigatsionnaya Sputnikovaya Sistema (GLONASS), Galileo and/or BeiDou. The receiver 1245 may provide data to application processor 1205 which may include one or more of position data or time data. Application processor 1205 may use time data to synchronize operations with other radio base stations.

In some aspects, user interface 1250 may include one or more of physical or virtual buttons, such as a reset button, one or more indicators such as light emitting diodes (LEDs) and a display screen.

Another example is a computer program having a program code for performing at least one of the methods described herein, when the computer program is executed on a computer, a processor, or a programmable hardware component. Another example is a machine-readable storage including machine readable instructions, when executed, to implement a method or realize an apparatus as described herein. A further example is a machine-readable medium including code, when executed, to cause a machine to perform any of the methods described herein.

The examples as described herein may be summarized as follows:
An example (e.g., example 1) relates to a system for deterministic communications between a plurality of interconnected semiconductor chips. The system includes a plurality of semiconductor chips and a controller coupled to each of the plurality of semiconductor chips, respectively, and configured to transfer data from one semiconductor chip to another. Each of the plurality of semiconductor chips and the controller include a respective clock, and the controller is configured to synchronize the clocks of the plurality of semiconductor chips, and schedule and manage data flows from and to the plurality of semiconductor chips for deterministic communications between the plurality of semiconductor chips.

Another example, (e.g., example 2) relates to a previously described example (e.g., example 1), wherein each of the plurality of semiconductor chips and the controller are configured add a timestamp to packets in the data flow each semiconductor chip and the controller send.

Another example, (e.g., example 3) relates to a previously described example (e.g., any one of examples 1-2), wherein the controller is configured to implement IEEE TSN protocol for scheduling and managing the data flows between the plurality of semiconductor chips.

Another example, (e.g., example 4) relates to a previously described example (e.g., any one of examples 1-3), wherein the controller is coupled to at least one of the semiconductor chips wirelessly.

Another example, (e.g., example 5) relates to a previously described example (e.g., example 4), wherein the controller is coupled to the at least one of the semiconductor chips using a Wi-Fi or Bluetooth protocol.

Another example, (e.g., example 6) relates to a previously described example (e.g., any one of examples 1-5), wherein the controller includes a network interface card and a switch, wherein the network interface card is configured to schedule and manage the data flows between the semiconductor chips, and the switch is configured to route the data flows between the plurality of semiconductor chips for deterministic communications between the plurality of semiconductor chips.

Another example, (e.g., example 7) relates to a previously described example (e.g., any one of examples 1-6), wherein the controller is a Software Defined Networking-based entity that is configured to schedule and manage the data flows between the semiconductor chips and route the data flows between the plurality of semiconductor chips for deterministic communications between the plurality of semiconductor chips.

Another example, (e.g., example 8) relates to a previously described example (e.g., any one of examples 1-7), further comprising a feedback module configured to adjust the system for optimal performance based on real-time feedback.

Another example, (e.g., example 9) relates to a previously described example (e.g., example 8), wherein the feedback module is an artificial intelligence-based module or a machine learning-based module.

Another example, (e.g., example 10) relates to a previously described example (e.g., any one of examples 1-9), wherein the plurality of semiconductor chips include at least one of a CPU, a GPU, an NPU, a sensor, a hardware accelerator, a wireless communication module, or a video rendering module.

Another example, (e.g., example 11) relates to an artificial intelligence personal computer including the system as in any one of examples 1-10.

Another example, (e.g., example 12) relates to a method for deterministic communications between a plurality of interconnected semiconductor chips in a system wherein each of the plurality of semiconductor chips is coupled to a controller, respectively. The method includes synchronizing clocks of the plurality of semiconductor chips, and transferring, by the controller, a data flow received from one of the plurality of semiconductor chips to another of the plurality of semiconductor chips, wherein in transferring the data flow, the data flow is scheduled and managed by the controller for deterministic communications between the plurality of semiconductor chips.

Another example, (e.g., example 13) relates to a previously described example (e.g., example 12), wherein each of the plurality of semiconductor chips and the controller add a timestamp to packets in the data flow each semiconductor chip and the controller send.

Another example, (e.g., example 14) relates to a previously described example (e.g., any one of examples 12-13), wherein IEEE TSN protocol is implemented for scheduling and managing the data flows between the plurality of semiconductor chips.

Another example, (e.g., example 15) relates to a previously described example (e.g., any one of examples 12-14), wherein the controller is coupled to at least one of the semiconductor chips wirelessly.

Another example, (e.g., example 16) relates to a previously described example (e.g., example 15), wherein the controller is coupled to the at least one of the semiconductor chips using a Wi-Fi or Bluetooth protocol.

Another example, (e.g., example 17) relates to a previously described example (e.g., any one of examples 12-16), further comprising adjusting the system for optimal performance based on real-time feedback.

Another example, (e.g., example 18) relates to a previously described example (e.g., example 17), wherein the system is adjusted using an artificial intelligence-based module or a machine learning-based module.

Another example, (e.g., example 19) relates to a previously described example (e.g., any one of examples 12-18), wherein the plurality of semiconductor chips include at least one of a CPU, a GPU, an NPU, a sensor, a hardware accelerator, a wireless communication module, or a video rendering module.

Another example, (e.g., example 20) relates to a non-transitory machine-readable medium including code, when executed, to cause a machine to synchronize clocks of a plurality of semiconductor chips coupled to a controller in a system, and transfer a data flow received by the controller from one of the plurality of semiconductor chips to another of the plurality of semiconductor chips, wherein in transferring the data flow, the data flow is scheduled and managed by the controller for deterministic communications between the plurality of semiconductor chips.

Another example, (e.g., example 21) relates to a previously described example (e.g., example 20), wherein each of the plurality of semiconductor chips and the controller add a timestamp to packets in the data flow each semiconductor chip and the controller send.

Another example, (e.g., example 22) relates to a previously described example (e.g., any one of examples 20-21), wherein IEEE TSN protocol is implemented for scheduling and managing the data flows between the plurality of semiconductor chips.

Another example, (e.g., example 23) relates to a previously described example (e.g., any one of examples 20-22), wherein the controller is coupled to at least one of the semiconductor chips wirelessly.

Another example, (e.g., example 24) relates to a previously described example (e.g., example 23), wherein the controller is coupled to the at least one of the semiconductor chips using a Wi-Fi or Bluetooth protocol.

Another example, (e.g., example 25) relates to a previously described example (e.g., any one of examples 20-24), wherein the code is further configured to adjust the system for optimal performance based on real-time feedback.

Another example, (e.g., example 26) relates to a previously described example (e.g., example 25), wherein the system is adjusted using an artificial intelligence-based module or a machine learning-based module.

Another example, (e.g., example 27) relates to a previously described example (e.g., any one of examples 20-26), wherein the plurality of semiconductor chips include at least one of a CPU, a GPU, an NPU, a sensor, a hardware accelerator, a wireless communication module, or a video rendering module.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for pedagogical purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a sensor signal", "means for generating a transmit signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

## Claims

1. A system, comprising:
a plurality of semiconductor chips (210a-210n); and
a controller (220) coupled to the plurality of semiconductor chips (210a-210n), respectively, and configured to transfer data from one of the plurality of semiconductor chips (210a-210n) to another,
wherein each of the plurality of semiconductor chips (210a-210n) and the controller (220) include a respective clock, and the controller (220) is configured to synchronize the clocks of the plurality of semiconductor chips (210a-210n), and schedule and manage data flows from and to the plurality of semiconductor chips (210a-210n) for deterministic communications between the plurality of semiconductor chips (210a-210n).

2. The system of claim 1, wherein each of the plurality of semiconductor chips (210a-210n) and the controller (220) are configured to add a timestamp to packets in the data flow each semiconductor chip and the controller (220) sends.

3. The system of claim 1 or 2, wherein the controller (220) is configured to implement IEEE Time Sensitive Networking protocol for scheduling and managing the data flows between the plurality of semiconductor chips (210a-210n).

4. The system as in any one of claims 1-3, wherein the controller (220) is coupled to at least one of the plurality of semiconductor chips (210a-210n) wirelessly.

5. The system as in any one of claims 1-4, wherein the controller (220) includes a network interface card and a switch, wherein the network interface card is configured to schedule and manage the data flows between the plurality of semiconductor chips (210a-210n), and the switch is configured to route the data flows between the plurality of semiconductor chips (210a-210n) for deterministic communications between the plurality of semiconductor chips (210a-210n).

6. The system as in any one of claims 1-5, wherein the controller (220) is a Software Defined Networking-based entity that is configured to schedule and manage the data flows between the plurality of semiconductor chips (210a-210n) and route the data flows between the plurality of semiconductor chips (210a-210n) for deterministic communications between the plurality of semiconductor chips (210a-210n).

7. The system as in any one of claims 1-6, further comprising a feedback module configured to adjust the system for optimal performance based on real-time feedback.

8. The system as in any one of claims 1-7, wherein the plurality of semiconductor chips (210a-210n) include at least one of a central processing unit, a graphics processing unit, a neural processing unit, a sensor, a hardware accelerator, a wireless communication module, or a video rendering module.

9. A method comprising:
synchronizing clocks of a plurality of semiconductor chips (210a-210n) coupled to a controller (220) in a system; and
transferring, by the controller (220), a data flow received from one of the plurality of semiconductor chips (210a-210n) to another of the plurality of semiconductor chips (210a-210n), wherein in transferring the data flow, the data flow is scheduled and managed by the controller (220) for deterministic communications between the plurality of semiconductor chips (210a-210n).

10. The method of claim 9, wherein each of the plurality of semiconductor chips (210a-210n) and the controller (220) add a timestamp to packets in the data flow each semiconductor chip and the controller (220) send.

11. The method of claim 9 or 10, wherein IEEE Time Sensitive Networking protocol is implemented for scheduling and managing the data flows between the plurality of semiconductor chips (210a-210n).

12. The method as in any one of claims 9-11, wherein the controller (220) is coupled to at least one of the plurality of semiconductor chips (210a-210n) wirelessly.

13. The method as in any one of claims 9-12, further comprising adjusting the system for optimal performance based on real-time feedback.

14. The method as in any one of claims 9-13, wherein the plurality of semiconductor chips include at least one of a central processing unit, a graphics processing unit, a neural processing unit, a sensor, a hardware accelerator, a wireless communication module, or a video rendering module.

15. A non-transitory machine-readable medium including code, when executed, to cause a machine to perform the method as in any one of claims 9-14.
